# EUROPEAN PATENT APPLICATION

(11) **EP 4 800 457 A1**
(43) Date of publication of application: **02.09.2026**
(21) Application number: 25160434.4
(22) Date of filing: 26.02.2025
(51) Int. Cl.: G02B 27/10, G03B 21/20

(54) **COMPACT OPTICAL MODULE FOR ENTERTAINMENT APPLICATIONS**

(71) Applicant: Laserworld AG, 8574 Lengwil (CH)
(72) Inventor: Dittrich, Helmar, 10247 Berlin (DE); Sollinger, Michael, 10823 Berlin (DE)
(74) Representative: Mzb PartmbB

(57) **Abstract**

The invention relates to an optical module (10) for generating a light beam for entertainment applications, having at least two light sources (14) configured to generate at least two single light beams (16), wherein the optical module (10) has a holder (11), wherein the light sources (14) are configured to emit the single light beams (16) into a vertical direction (z), wherein a mirror (18) is mounted above each one of the light sources (14) to redirect the single light beams (16) from a vertical direction (z) into a horizontal direction (x, y), wherein the mirrors (18) are fixed to a first side (S1) of a vertical wall (17) of the holder (11). The invention provides cost-efficient and compact solutions for high-power and high-precision lighting applications.

## Description

### Technical Field

The invention relates to an optical module for generating a light beam. Such optical modules are employed, for example, in lighting applications for entertainment.

### Background Art

WO2023232224 A1 describes an optoelectronic module and a process for the manufacture thereof.

### Summary of Invention

The invention is set out in the appended set of claims.

### Technical Problem

Entertainment applications, for example long range laser shows, often require high-power laser beams, for example, having an optical power of at least 20 W. For long-range applications, the laser beams should have low divergences.

Entertainment events like laser shows often take place on varying sites, during only a few days and / or offer only little space for the laser equipment. Therefore, the laser equipment should be compact and portable, while nonetheless be capable to provide high-power light beams with low divergences.

Therefore, it is an object of the invention to provide an optical module for generating a light beam for entertainment applications. The optical module should be compact in size and be capable to provide high-power light beams of low divergences.

### Solution to the Problem

As shall be further elucidated in the following description, this problem is solved by an optical module for generating a light beam for entertainment applications, having at least two light sources configured to generate at least two single light beams, wherein the optical module has a holder, wherein the light sources are configured to emit the single light beams into a vertical direction, wherein a mirror is mounted above each one of the light sources to redirect the single light beams from a vertical direction into a horizontal direction, wherein the mirrors are fixed to a first side of a vertical wall of the holder.

### Advantageous Effects of Invention

The light sources produce a plurality of single light beams which then can be combined into a combined light beam by a combiner. The total of the single light beams and / or the combined light beam may reach a high output power, for example, at least 20 W or at least 100 W or more, even with low-cost light sources. The output power may be adapted by choosing the appropriate total number of light sources.

A compact design is possible as the light sources emit light beams into a vertical direction and as the mirrors are mounted above, in particular vertically above, the light sources. Due to the vertical arrangement of optical components of the optical module, such an optical module requires only a small area on the event site, for example on a desk dedicated to optical equipment of the event.

Several of such vertically oriented optical modules, for example for producing different wavelengths, may be arranged next to each other, thus forming a compact multi-light beam apparatus.

As a further advantage, the vertical wall to which the mirrors are fixed may form a rigid base structure for precisely holding the mirrors in correct positions and orientations relative to one another. The required precision of orientation of the mirrors may be, for example, equal or better than an angle of 50 µrad.

Moreover, rigidity is further improved as all the mirrors may be directly fixed to the same vertical wall.

It may be understood that expressions of orientation or position, e. g. a "vertical object", "above", "below" or "horizontal object" may refer to an orientation or position of the respective object during a normal use, preferably a normal use of the object after it has been completely manufactured.

The light sources and their corresponding mirrors may be arranged in at least two clusters. Each cluster may comprise a set of mirrors and / or prisms for redirecting and / or combining the respective single light beams to provide a pre-combined light beam. All pre-combined light beams may be combined with each other to form the combined light beam. Each cluster may comprise a plurality of light sources, e. g. 4, 5, 7, 10, or more.

All of the mirrors of a first cluster may be fixed to the first side, and all of the mirrors of a second cluster may be fixed to an opposite, second side of the vertical wall. Thus, mirrors of two neighbouring clusters may make use of the same vertical wall. This may further improve the optical module's compactness. A temperature distribution of the wall and / or of the mirrors may be similar or equal for both of the clusters.

The holder may comprise a trough, the trough comprising the vertical wall. In particular, the trough may comprise two vertical walls. The light sources and / or the mirrors may be arranged between the two vertical walls. The trough may thus protect the light sources and / or the mirrors. The design may be particularly compact, if mirrors of three or more clusters are mounted to the sides of the vertical walls.

The light sources may be arranged at a bottom part of the trough. The light sources may be cooled efficiently through an underside of the trough and / or by coolers arranged at the underside of the trough.

The combiner may combine the single light beams to form a combined light beam. For example, the combiner may be configured to combine single light beams of different polarizations and from different directions into one light beam. Single light beams may be unified, for example in case of different wavelengths.

Flexibility may be further improved, if the combiner comprises a prism, for example a dovetail prism, for combining the single light beams. In particular the combiner may be a dovetail prism. By adapting the size and / or shape of the prism, the optical module may be easily adapted, even to a large number of light sources.

In the alternative, or additionally, the combiner may comprise a combination of a deflection mirror and a polarization cube or disc to combine the single light beams in a cost-effective way.

In some particularly compact embodiments, the combiner may be arranged on or in front of a front side of the vertical wall. It may span perpendicularly to the vertical wall from the first side to the second side of the vertical wall. Such an embodiment may comprise only a low number of parts and, thus, be particularly cost-efficient.

The light sources may comprise laser light sources, for example laser diodes. High-power laser diodes often have highly differing fast axis widths and slow axis widths. A fast axis width may typically be approximately 1 µm, whereas a typical slow axis width may be approximately 20 µm, corresponding to a ratio of approximately 1 : 20 (or even more).

To reduce this ratio and to efficiently pre-collimate a single light beam, the laser light source, for example the laser diode, may comprise an integrated fast axis collimator, in the following: FAC. The FAC may be directly mounted to the laser diode and thus be particularly rigidly fixed to the laser diode and, thereby, to the rest of the optical module.

For further collimation, each of the light beams may pass at least one separate collimator.

The at least one collimator may comprise a cylindrical lens. In some embodiments, the collimator may comprise a spherical lens, which may substantially facilitate the assembly of the optical module. A spherical lens may have fewer degrees of freedom to be justified during assembly compared to a cylindrical lens. The collimator may comprise an achromatic lens, in particular a spherical achromatic lens.

It is conceivable that, the optical module may be configured such that the single light beams are pre-collimated in regard to the fast axes of their laser light source by the fast axis collimators. The single light beams may then pass the spherical lenses of the collimators to be collimated in regard to the slow axes of the laser light sources. Additionally, the single light beams may be combined into the combined light beam.

To facilitate the optimization of the total divergence of the combined light beam, the light sources may be arranged on the vertical wall and / or in the trough with the same orientation and / or heading. In particular, their fast axes may be oriented parallel to one another, and their slow axes may be oriented parallel to one another.

In this way, the total number of parts required to reach an excellently low total divergence of the combined light beam may be reduced in contrast to forming each of the single light beams separately in regard to their fast and slow axes and to combine them afterwards.

The collimator may be arranged in the trough, in particular at a distance from the corresponding light sources and / or close to the corresponding light source.

The mirrors may be fixed to the vertical wall in a particularly durable and stable, and also very cost-efficient, way by glueing them with an adhesive.

Furthermore, directly glueing the mirrors may avoid or reduce the need for a later re-alignment of the mirrors. This can further reduce servicing costs as compared to, e. g., mirrors that are fixed by screws or the like and that therefore may lose their positions and / or orientations by the time without regular realignment. Therefore, this may further contribute to the cost-efficiency of the optical module.

Own studies have shown that the positions and orientations of the mirrors can be kept very precisely and durably, if the mirrors are fixed, in particular to two or more vertical walls of the trough, at at least two opposing positions. In particular, the mirrors may be glued to two neighbouring vertical walls of the trough. It is conceivable that also other elements of the optical module, for example one or more lenses, are fixed to the vertical walls.

Fixing, in particular glueing, the mirrors or, generally speaking, the elements, directly to the holder, e. g. the trough, at two or more opposing positions has shown to enable divergences of the combined light beam of 1 mrad or less, as is required for high-power, long-range laser beam applications, for example for laser displays for entertainment applications. A collinearity of the single light beams of better than 100 µrad, for example in the range of 0.01 to 0.1 mrad, can be achieved.

Glueing may enable to preserve such a high degree of collinearity also in the long term.

The combined light beam may be shaped in a defined fashion if the optical module has a beam shaper. The beam shaper may be configured that the single light beams and / or the combined light beam pass through the beam shaper. The beam shaper may preferably comprise anamorphic prisms. For example, the anamorphic prisms may be used to modify the combined light beam's divergence-diameter ratio according to the specific requirements or target parameters. In some embodiments, the beam shaper, in particular its anamorphic prism, may collimate the combined light beam in order to reach a target divergence. For example, a divergence in regard to the fast axes added during a collimation by the spherical lens, may be corrected.

Hence, the optical module may enable a distinctive beam modelling depending on application-specific requirements, for example by adequately designing and arranging the anamorphic prisms and / or the combiner.

Using anamorphic prisms for the beam shaper may also reduce the total number of parts of the optical module compared to a complex system of different lenses or the like. As the beam shaper may consist of only a few parts that need to be securely and precisely positioned relative to one another, shock resistance of the optical module may be improved further.

To improve heat transfer and, hence, to reduce changes of the optical module's geometry due to thermal linear expansion and the like, the vertical wall and / or the trough may be made of aluminium. Moreover, in general, aluminium is less expensive than other materials with high specific thermal conductivity like, e. g., copper. A metal vertical wall and / or holder, in particular a trough made from aluminium, may also protect the light sources against damage and, thus, further improve the shock resistance.

The assembly is particularly facilitated if the mirrors for redirecting the single light beams and / or the combined light beam are arranged in an upper part of the vertical wall or, respectively, the holder.

Preferably, the adhesive may be configured to be cured by light, in particular ultraviolet light, and / or by microwaves. This may simplify the manufacturing process, as the mirrors may be precisely positioned and then quickly and durably fixed by glueing and curing, in particular within seconds. Particularly advantageously, ultraviolet light can be focused on the adhesive to be cured, so that the adhesive can be cured particularly selectively. Moreover, ultraviolet light and / or microwaves can be timed very precisely. So, the curing process can be started exactly when a mirror has precisely reached its intended position. As a result, the quality of the single light beams and / or the combined light beam may be further improved.

To provide for a high colour stability, coherence and low divergence, at least one of the light sources, preferably all light sources, may comprise a laser light source, for example a laser diode.

In some embodiments, the optical module may comprise one or more active coolers, for example in form of Peltier elements, configured to cool at least one of the light sources and / or the holder, e.g. the trough. The active coolers may further increase cooling power available to cool the light sources, and, thus, to further enhance their temperature stability, chromatic stability, total lifetime, etc., and the geometrical stability of the optical module as a whole. Additionally, or alternatively, the coolers may comprise a fluid-based cooler, for example a water-based cooler.

A maximum total input power of the optical module may be at least 100 W to facilitate, for example, outdoor applications.

In some, particularly compact, embodiments, the optical module may have a width of the optical module of equal or less than 5 cm and/or may have a length of the optical module which is equal or less than 20 cm. Such a compact design is possible due to the low number of individual parts of the optical module and the arrangement of main parts, like the light sources, the mirrors, the combiner, the beam shaper, etc. in or at holder, enabling an efficient thermal management and flexible design options.

Further features and advantages of the invention result from the following detailed brief description of the drawings, the description of embodiments of the invention and the figures in the drawings, which show details of the invention, and from the claims.

The individual features can be realized individually or in combinations in various embodiments of the invention.

### Brief Description of Drawings

Fig. 1, fig. 2, fig. 3, fig. 4 show a first embodiment of an optical module,
fig. 5, fig. 6, fig. 7, fig. 8 show a second embodiment of an optical module,
and fig. 9 and fig 10 show a third embodiment of an optical module.

### Description of Embodiments

To facilitate the understanding of the invention, the same reference signs are used for equal or similar parts throughout the following description.

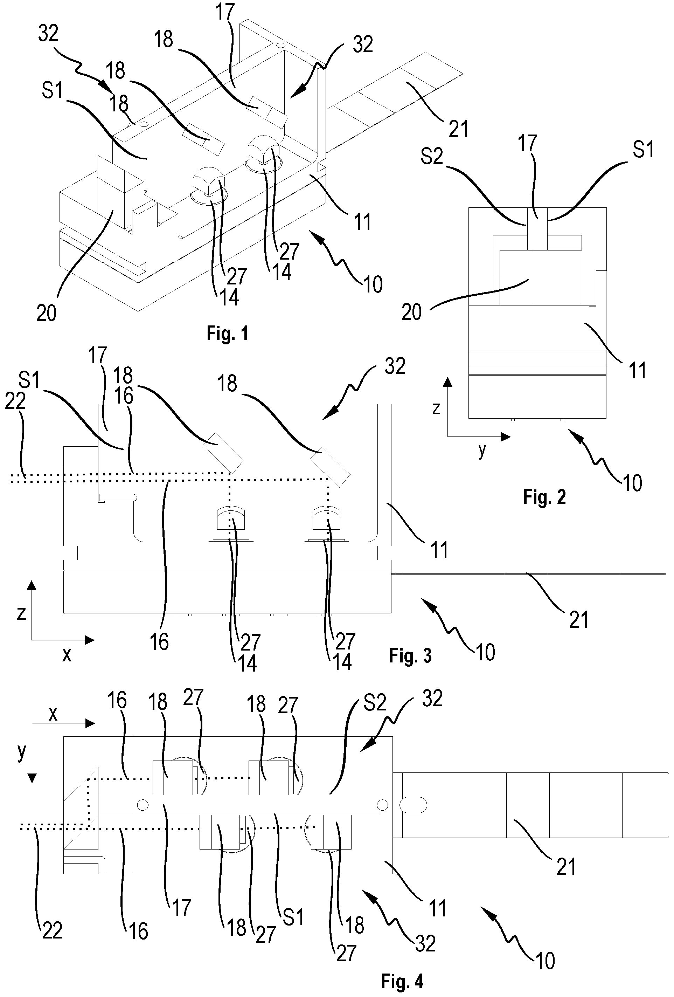

Fig. 1, fig. 2, fig. 3 and fig. 4 show a first embodiment of an optical module 10 for generating a light beam for entertainment applications. Fig. 1 shows a perspective view, fig. 2 shows a front view onto an yz plane, fig. 3 shows a side view onto an xz plane, and fig. 4 shows a top view onto an xy plane of the optical module 10.

This optical module 10 comprises four light sources 14 configured to emit single light beams 16 into a vertical direction z.

The light sources 14 are arranged in a holder 11. The holder 11 comprises a vertical wall 17. The holder 11 may be monolithic or may be assembled from a plurality of single parts.

The single light beams 16 pass collimators 27, which individually collimate the single light beams 16 further.

Four mirrors 18 are fixed to the vertical wall 17, two of which are fixed to a first side S1, and the other two of which are fixed to a second side S2 of the vertical wall 17.

Each of the mirrors 18 is mounted above each one of the light sources 14. As can be seen from, for example, fig. 3, the mirrors 18 are oriented and positioned such that they redirect the single light beams 16 from a vertical direction z into a horizontal direction x.

The light sources 14 and their corresponding mirrors 18 are arranged in two clusters 32, wherein all of the mirrors 18 of a first cluster 32 are fixed to the first side S1, and wherein all of the mirrors 18 of a second cluster 32 are fixed to the opposite, second side S2 of the vertical wall 17.

The single light beams 16 are combined in a combiner 20 to form a combined light beam 22. The combiner 20 comprises a prism, in particular a dovetail prism.

The combiner 20 is arranged on a front side of the vertical wall 17.

A printed circuit board 21 holds electronic equipment for controlling the optical module 10 and in particular for controlling the light sources 14.

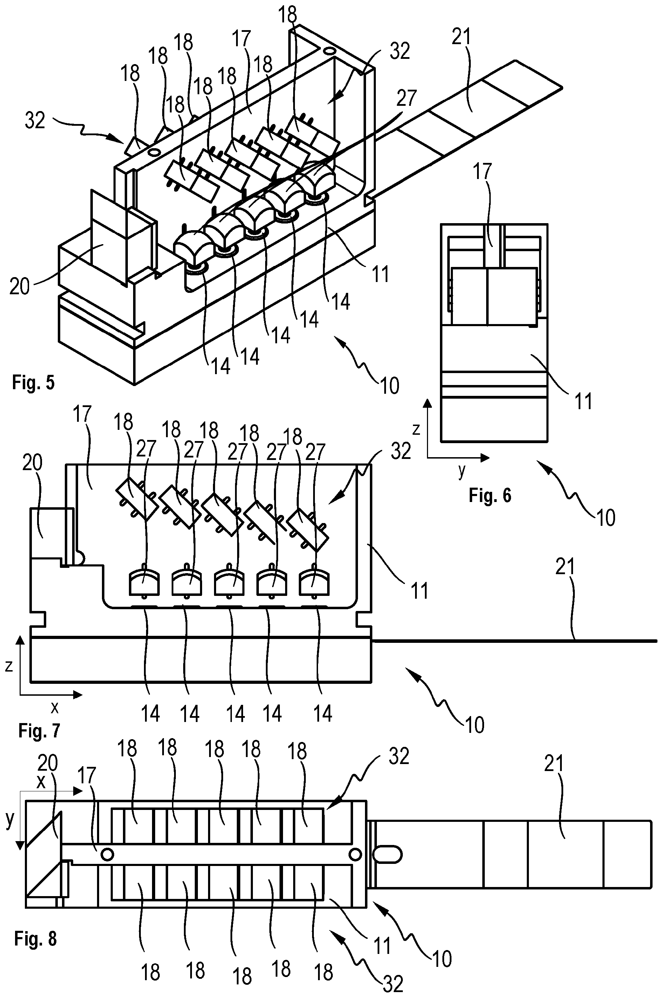

Fig. 5, fig. 6, fig. 7 and fig. 8 show a further embodiment of an optical module 10 for generating a light beam for entertainment applications. Fig. 5 shows a perspective view, fig. 6 shows a front view onto an yz plane, fig. 7 shows a side view onto an xz plane, and fig. 8 shows a top view onto an xy plane of this optical module 10.

If not otherwise mentioned hereinafter, this embodiment is similar to the previously described embodiment of the optical module 10. A difference between this embodiment and the previously described embodiment is that the optical module 10 according to figures 5 to 8 comprises two clusters 32 of five light sources 14, five mirrors 18 and five collimators 27 each. As before, the light sources 14 and the mirrors 18 are arranged on the holder 11. In particular, the mirrors 18 are fixed to a vertical wall 17 of the optical module 10.

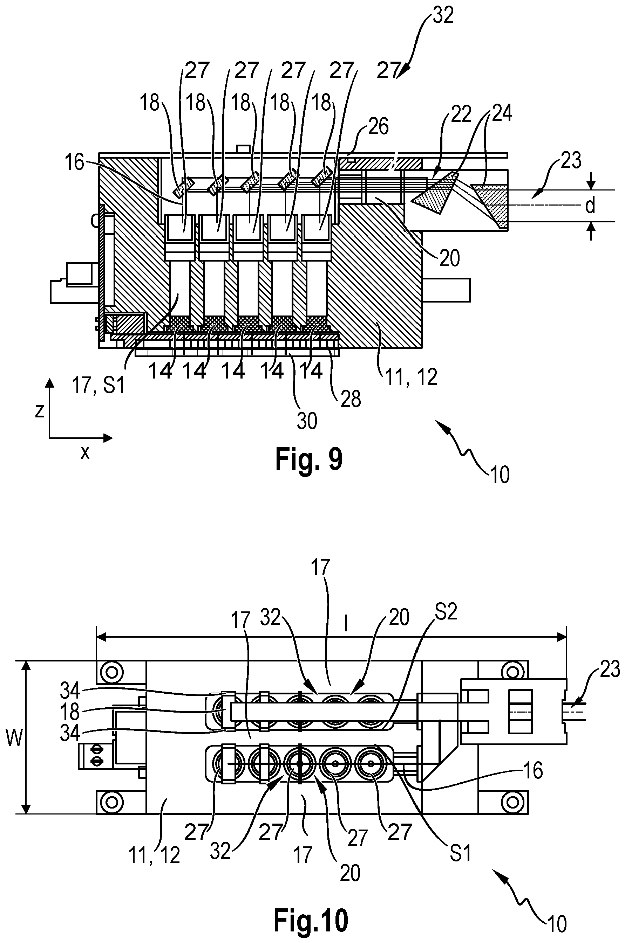

Fig. 9 and fig. 10 show a further embodiment of an optical module 10 for generating a light beam, which is explained in the following description in detail. If not otherwise explicitly noted, functionalities and elements described in regard to this embodiment of an optical module 10 may also be applicable to the previously described optical modules 10 according to figures 1 to 8.

A difference of this embodiment compared to the previously described embodiments is that the optical module 10 has a holder 11 in the form of a trough 12. The trough 12 is made of aluminium.

The trough 12 comprises several vertical walls 17.

A plurality of light sources 14, in particular ten light sources 14, clustered into two clusters 32, is arranged in a bottom part of the trough 12. The light sources 14 comprise laser diodes, which emit a plurality of single light beams 16 in the form of laser light beams in the vertical direction z. In order to simplify fig. 9, only one of the single light beams 16 is marked with the reference number 16.

Each of the light sources 14 comprises a fast axis collimator 15 for pre-collimating the single laser light beams 16.

The single light beams 16 pass the collimators 27, which individually collimate the single light beams 16 further.

The single light beams 16 are redirected in a horizontal direction x by several mirrors 18. The mirrors 18 are slightly displaced to one another along the vertical direction z.

The mirrors 18 are glued with adhesives directly to two of the three vertical walls 17 in an upper part of the trough 12, so that their positions and orientations relative to the trough 12 are permanently and rigidly fixed.

The single light beams 16 pass through the combiner 20. As will be described in more detail in relation to fig. 10, the combiner 20 combines the single light beams 16 and other, additional light beams from a separate cluster of light sources 14 in order to form a combined light beam 22. The combiner 20 is configured to combine different light beams from different directions having different polarizations into one beam. The combiner 20 comprises a dovetail prism.

The combined light beam 22 is further shaped by a beam shaper 24. The beam shaper 24 comprises a set of anamorphic prisms. It widens the combined light beam 22 to a diameter d forming a final combined light beam 23. The diameter d may be chosen according to an envisaged application and / or environment.

As a result, the optical module 10 generates the final combined light beam 23.

A top side of the trough 12 is protected against dust, humidity, etc. by a cover 26.

The light sources 14 are in thermal contact to an underside 28 of the trough 12. The underside 28 forms a cooling area for cooling the light sources 14, in particular by thermal conduction. Active coolers 30 are mounted on an outer side of the underside 28. The active coolers 30 comprise thermoelectric elements, e. g. Peltier elements, for actively cooling the underside 28 and, thus, the light sources 14.

As can be seen in fig. 10, the light sources 14 form two clusters 32. The two clusters 32 are arranged at the two sides S1, S2 of the vertical wall 17 in the middle of the trough 12.

Each cluster 32 of this embodiment comprises five light sources 14.

In this embodiment, the clusters 32 and its respective light sources 14 are similar to each other in nature and in respect to the vertical orientation of the single light beams 16 at their respective light sources 14. It is conceivable that the light sources 14 comprise laser diodes of different wavelengths, intensity and / or geometry.

In this embodiment, all of the single light beams 16 of each of the clusters 32 share the same polarization, thus enabling the combiner 20 to polarization-combine the single light beams 16 of the two clusters 32 into the combined light beam 22.

The resulting combined light beam 22 may be non-polarized but may maintain other beam specifications of the single light beams 16. The resulting beam specifications of the final combined light beam 23, in particular its diameter d, may, in particular, be adjusted by adequately choosing and placing the beam shaper 24.

The optical module 10 has a length l of less than 0.2m, e. g. 9 cm. Its width w is less than 0.1 m, e. g. 5 cm.

Fig. 10 schematically shows adhesives 34, which have been cured by exposure to ultraviolet light so that they glue the mirrors 18 directly to the vertical walls 17 of the trough 12. Due to the cross-sectional view of the optical module 10, only a few of the mirrors 18 and, thus, only a few of the adhesives 34 are visible in fig. 10.

### Industrial Applicability

The invention is applicable throughout the entertainment industry. Its benefits particularly apply over a wide range of entertainment applications relating to illumination and / or light projections.

**Reference Signs List**

| **Reference sign** | **Description** |
|---|---|
| 10 | optical module |
| 11 | holder |
| 12 | trough |
| 14 | light source |
| 15 | fast axis collimator |
| 16 | single light beam |
| 17 | vertical wall |
| 18 | mirror |
| 20 | combiner |
| 21 | printed circuit board |
| 22 | combined light beam |
| 23 | final combined light beam |
| 24 | beam shaper |
| 26 | cover |
| 27 | collimator |
| 28 | underside |
| 30 | cooler |
| 32 | cluster |
| 34 | adhesive |
| d | diameter |
| l | length |
| w | width |
| x | horizontal direction |
| y | horizontal direction |
| z | vertical direction |
| S1 | first side |
| S2 | second side |

## Claims

1. Optical module (10) for generating a light beam for entertainment
applications, having at least two light sources (14) configured to generate at least two single light beams (16),
wherein the optical module (10) has a holder (11),
wherein the light sources (14) are configured to emit the single light beams (16) into a vertical direction (z),
wherein a mirror (18) is mounted above each one of the light sources (14) to redirect the single light beams (16) from a vertical direction (z) into a horizontal direction (x, y),
wherein the mirrors (18) are fixed to a first side (S1) of a vertical wall (17) of the holder (11).

2. Optical module according to the previous claim, **characterized in that** the light sources (14) and their corresponding mirrors (18) are arranged in at least two clusters (32), wherein all of the mirrors (18) of a first cluster (32) are fixed to the first side (S1), and wherein all of the mirrors (18) of a second cluster (32) are fixed to an opposite, second side (S2) of the vertical wall.

3. Optical module (10) according to any of the previous claims, **characterized in that** the single light beams (16) are combined in a combiner (20) to form a combined light beam (22).

4. Optical module according to any of the previous claims, **characterized in that** the combiner (20) comprises a prism, for example a dovetail prism.

5. Optical module according to any of the previous claims, **characterized in that** the combiner (20) is arranged on or in front of a front side of the vertical wall (17).

6. Optical module according to any of the previous claims, **characterized in that** each of light sources (14) comprises a laser light source with an integrated fast axis collimator (15).

7. Optical module according to any of the previous claims, **characterized in that** each of the single light beams (16) passes at least one separate collimator (27).

8. Optical module according to any of the previous claims, **characterized in that** the at least one separate collimator (27) is fixed to the vertical wall (17).

9. Optical module according to any of the previous claims, **characterized in that** the mirrors are fixed by glueing them with an adhesive (34).

10. Optical module according to any of the previous claims, having a beam shaper (24), wherein the beam shaper (24) is configured that the single light beams (16) and / or the combined light beam (22) pass through the beam shaper (24), wherein the beam shaper (24) preferably comprises anamorphic prisms.

11. Optical module (10) according to any of the previous claims, **characterized in that** the holder (11) comprises a trough (12), the trough (12) comprising the vertical wall (17).

12. Optical module (10) according to any of the previous claims, **characterized in that** the light sources (14) are arranged at a bottom part of the trough (12).

13. Optical module according to any of the previous claims, **characterized in that** the mirrors (18) for redirecting the single light beams (16) and / or the combined light beam (22) are arranged in an upper part of the holder (11), in particular in an upper part of the trough (12).
